(19) Europäisches Patentamt
European Patent Office
Office européen des brevets

(11) **EP 4 194 086 A1**

(12) **EUROPEAN PATENT APPLICATION**

(43) Date of publication:
**14.06.2023 Bulletin 2023/24**

(21) Application number: **22000240.6**

(22) Date of filing: **27.10.2022**

(51) International Patent Classification (IPC):
**B01J 21/18** (2006.01)    **B01J 23/42** (2006.01)
**B01J 35/00** (2006.01)    **B01J 35/02** (2006.01)
**B01J 35/10** (2006.01)    **B01J 37/00** (2006.01)
**B01J 37/04** (2006.01)    **B01J 37/06** (2006.01)
**B01J 37/08** (2006.01)

(52) Cooperative Patent Classification (CPC):
**B01J 35/026; B01J 21/18; B01J 23/42;**
**B01J 35/002; B01J 35/0026; B01J 35/023;**
**B01J 35/1014; B01J 37/0009; B01J 37/0063;**
**B01J 37/04; B01J 37/06; B01J 37/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2021 RO 202100769**

(71) Applicant: **INCDTCI - ICSI Institutul National de Cercetare-**
**Dezvoltare pentru Tehnologii Criogenice si Izotopice**
**240050 Valcea (RO)**

(72) Inventors:
• **IONITA, Gheorghe**
  **Rm. Valcea**
  **Jud. Valcea (RO)**

• **VASUT, Felicia**
  **Ramnicu Valcea**
  **Jud. Valcea (RO)**
• **SOFILCA, Nicolae-Constantin**
  **Ramnicu Valcea**
  **Jud. Valcea (RO)**
• **SPIRIDON, Stefan-Ionut**
  **Rm. Valcea**
  **Jud. Valcea (RO)**
• **DINCA, Adrian Valeriu**
  **Rm. Valcea**
  **Jud. Valcea (RO)**

(74) Representative: **Mehl-Mikus, Claudia**
**mepat Patentanwälte**
**Dr. Mehl-Mikus, Goy, Dr. Drobnik PartG mbB**
**Eisenlohrstraße 31**
**76135 Karlsruhe (DE)**

(54) **PROCESS FOR MANUFACTURE OF A HYDROPHOBIC CATALYST COMPRISING PLATINUM ON CARBON AND PTFE, HYDROPHOBIC CATALYST AND USE THEREOF**

(57)    The invention as herein described discloses a process for the manufacture of a hydrophobic catalyst comprising platinum on carbon (Pt/C) and polytetrafluoroethylene (PTFE), the process comprising the steps of
- providing commercial platinized carbon (Pt/C) powder with a specific surface area greater than 500 $m^2/g$ and polytetrafluoroethylene (PTFE) powder having a crystallinity of more than 50 % and a specific surface area higher than 25 $m^2/g$, in a mass ratio of one part to four parts, wherein both powder have close dimensions below 350 $\mu m$;
- first mixing manually of the both powders and then homogenizing mechanically with a paddle stirrer at a speed of 1300 to 2500 rpm, wherein homogeneity of the mixture is checked;

- shaping the homogeneous mixture in a single-station mould or in a multi-station mould at a pressure within the range 1 $N/mm^2$ to 3,5 $N/mm^2$,
- sintering the shaped catalyst in a controlled atmosphere of inert gas at a temperature in a range of 320 to 380 °C;
- subsequently washing the sintered catalyst until complete disappearance of potential traces of fluorine and adsorbed chlorine, and
- finally drying the washed catalyst at a temperature in a range of 130 to 170 °C.
- obtaining the hydrophobic catalyst having a bulk density between 0.45 and 0.55, a contact angle greater than 120°, a specific surface area higher than 80 $m^2/g$, and an active metal concentration of 1.5 to 2.5 % Pt. Furthermore, the hydrophobic catalyst and its use are disclosed.

Fig. 1

**Description**

The invention relates to a process for the manufacture of a hydrophobic catalyst comprising platinum on carbon and polytetrafluoroethylene (PTFE), the hydrophobic catalyst itself, and use of the aforesaid.

In particular, the invention is related to a highly hydrophobic catalyst based on platinum containing carbon and Polytetrafluoroethylene (Pt/C/PTFE) and to the process for its manufacture, which catalyst is intended for the general application in any chemical, catalytic process occurring in the presence of moisture or liquid water or both, moisture and liquid water, and in particular in the process of deuterium and tritium separation by the hydrogen-liquid water isotope exchange process for the purpose of heavy water detritiation.

Unlike classical hydrophilic catalysts that inactivate rapidly on contact with liquid water or by capillary condensation of water vapour, hydrophobic catalysts are those metal/support type catalysts that, due to their specific porosity, allow access of reactants (gases, water vapour, etc.) to the active metal but because of the high hydrophobicity of the hydrophobising agent in their composition, they repel the access of liquid water, being able to operate in direct contact with liquid water and maintaining their catalytic activity for a long time.

In the process of liquid phase isotope deuterium-tritiated water exchange (Liquid Phase Catalytic Exchange-LPCE), the transfer of tritium from heavy tritiated water to deuterium is the result of the combination of two processes:

1) a physical isotope exchange process (1) between liquid phase tritiated heavy water $(DTO)_l$ and heavy water vapour $(D_2O)_v$ (classical distillation) which requires a highly hydrophilic contact element;

2) an isotope exchange process between deuterium gas $(D_2)_g$ and tritiated water vapour $(DTO)_v$ (2), which requires a hydrophobic catalyst, according to the balances below:

$$(DTO)_l + (D_2O)_v \leftrightarrow (DTO)_v + (D_2O)_l \qquad (1)$$

$$(DTO)_v + (D_2)_g \leftrightarrow (DT)_g + (D_2O)_v \qquad (2)$$

$$(DTO)_l + (D_2)_g \leftrightarrow (DT)_g + (D_2O)_l \qquad (3) = (1)+(2)$$

Hence, the catalyst for accelerating the isotope transfer process should have highly hydrophobic properties and should preserve the catalytic properties for a long time even under exposure to tritium radiation and direct contact with liquid water.

For this reason, in practical applications of the LPCE process, the hydrophobic catalyst is in most cases used in combination with a hydrophilic component, the mixture of the two components (hydrophilic component and hydrophobic catalyst) being called "mixed catalytic packing" and this ensures that the two processes run simultaneously in one column.

The catalysis of the hydrogen-water vapour isotope exchange process is strongly related to the hydrogen isotope separation process and the production of heavy water, a catalysis initially based on hydrophilic catalysts, such as platinum metals (Pt, Pd, Ni, etc.) / supports, catalysts with a reduced stability over time, caused by their rapid poisoning, as a result of water vapour condensation in the catalyst pores [1], Murphy, G. M.: Production of heavy water - Editura McGrawhill, New York, p. 9 to 52, 1955. The use of hydrophilic catalysts in the LPCE process, while efficient in terms of catalytic activity, requires complex isotope exchange column structures and geometries that prevent direct contact between liquid water and/or the presence of superheaters, which increases process costs significantly.

A first success was achieved with the achievement by Canadian researchers, led by W. H. Stevens [2], CA 907 292 A, of the first hydrophobic platinum/support catalysts hydrophobised by a special treatment, a promising idea for making hydrogen isotope separation processes feasible by liquid phase hydrogen-water isotope exchange (LPCE).

Later, Butler and Rolston [3], J. P. Butler, J. H. Rolston and W. H. Stevens: Novel catalysts for Isotopic Exchange between Hydrogen and Liquid water in Separation of Hydrogen Isotopes - ACS Symposium Series 68, Washington DC, 1977, proposed the deposition of platinum on a gamma-alumina support, followed by the deposition of a thin layer of silicone polymer as a hydrophobic agent to reject liquid water. In an attempt to identify the most effective hydrophobising agent/ treatment, they also proposed the deposition of catalytically active platinum directly into the pores of polytetrafluoroethylene (e. g. Teflon®) but its low porosity did not give the catalyst high catalytic efficiency. An important achievement of the same authors, similar in solution to the present invention, is the deposition of platinum on activated carbon, the production of a paste using Polytetrafluoroethylene emulsion and its deposition on preformed catalytic supports (rings, spheres, etc.), catalysts of this type being tested in the process of separating hydrogen isotopes on a pilot scale.

In the majority of countries that have developed heavy water production programmes, there has been intense concern at laboratory level to prepare such hydrophobic catalysts, the data/information being mostly confidential and those published being usually incomplete or contradictory. There is no commercially available hydrophobic catalyst on the world market at the moment for the applications mentioned in nuclear energy.

The research concerns on the manufacture of such catalysts have focused in particular on the hydrophobicity step, which gives the catalyst a high and stable hydrophobicity over time. To this end, 3 main directions were followed:

1) direct deposition of the catalytic active metal in a hydrophobic support;
2) hydrophobisation by treating a catalyst with different hydrophobising agents, classical-hydrophilic;
3) simultaneous mixing and treatment of the catalytically active component with the hydrophobic component, followed by shaping of the mixture.

Achievements based on direction (1) are known, such as the deposition of platinum on a quasi-porous polytetrafluoroethylene (PTFE - colloquially often referred to by the trade name "Teflon" from the DuPont company) support as well as by depositing platinum on an organic copolymer (Pt/CSDB) with high porosity but lower hydrophobic properties than PTFE. As far as the third direction of development is concerned, it has reached a certain maturity with high potential for application (at least at pilot scale), that is, platinum-based catalysts on carbon and polytetrafluoroethylene (Pt/C/PTFE).

In Romania two previous achievements are known, referring to a hydrophobic catalyst based on the process of simultaneous mixing and treatment of the components related to the final composition. These are a platinum/carbon and PTFE (Pt/C/PTFE) based catalyst, in the form of Rashig rings, with dimensions of 10 x 2 x 10 mm, with a platinum content between 0.44 to 0.52 % and a low BET specific surface, (20 $m^2/g$) as well as a platinum-based catalyst on styrene-divinylbenzene and polystyrene (Pt/SDB/PS), both prepared and patented according to patent RO 107 842 B1 [4]. The process for preparing the Pt/C/PTFE catalyst according to example no. 1 of achievement from the aforementioned patent starts from dissolving in a mixture of acetone and benzene hexachloro-platinic acid as a precursor of catalytically active platinum, followed by impregnation of activated carbon with high specific surface area and mixing with PTFE powder, in a gravimetric ratio of 25 parts PTFE and one part platinized carbon.

This catalyst has also formed the basis for the development of a mixed catalytic packing, in alternating layers, in which the catalyst represents 75 to 90 % of the volume of the mixed packing, according to patent RO 113 218 B1 [5].

A similar type of Pt/C/PTFE catalyst, in the form of Rashig rings, with the above characteristics, prepared pursuant to the aforementioned patent, is also known, but having the external surface coated with a hydrophilic stainless steel mesh. According to patent RO 107 558 B1 [6], the metal mesh retains liquid water on the external surface of the catalyst, which picks up the heat of reaction and so the catalyst can be used to manufacture a mixed, alternating catalytic feed for the combustion of stoichiometric mixtures of hydrogen and oxygen.

Because of the declining interest in promoting CANDU technology for nuclear fission reactors, based on the use of heavy water as a moderator, there has been a period of less interest in developing such types of catalysts and/or improving the performance of the existing ones. Along with the start of new nuclear fusion research programmes in various countries and the decision to build the fusion reactor (ITER) at Cadarache (France), interest in this class of catalysts has increased in proportion to the need to remove liquid and gaseous tritiated effluents, which can only be effectively achieved by the LPCE isotope exchange process. Moreover, because of the high level of radioactivity in an ITER fusion reactor, in addition to the requirements of hydrophobicity and high catalytic activity, a new requirement has appeared that of high stability to long exposure of the catalyst to a high radiation field in general and to tritium radiation in particular.

On a laboratory scale, dozens of types of declared hydrophobic catalysts with varying compositions and characteristics have been prepared by several confidential or partially disclosed processes. At present, the only type of hydrophobic catalyst that has reached technological maturity and is applied in an industrial tritium separation plant through the LPCE process is the catalyst developed by the companies KAERI and KEPRI (South Korea) [7], Seunwoo Paek Do-Hee Ahn, et al.:The performance of a trickle-bed reactor packed with a Pt/SDBC catalyst mixture for the CECE process - Fusion Engineering Design, Vol. 82, No. 15, p. 2252 to 2258, 2007 [7], and used in the isotope exchange columns (LPCE) of the Wolsong heavy water detritiation plant since 2007. This type of catalyst is prepared as 4 x 4 mm tablets by impregnation of styrene-divinyl-benzene copolymer, having a final platinum concentration of 1 %, a BET specific surface area of 452 $m^2/g$ and an apparent density of 0.18 $g/cm^3$.

Even though the authors report sufficient catalytic activity, the catalyst in question is partially hydrophobic as it deactivates over time [8], Soon Hwan Sohn and Kun Jae Lee: Deactivation of Hydrophobic Pt/SDBC in the WTRF LPCE Column for tritium Separation - Journal of Nuclear Science and Technology, Vol 43, No. 8, p. 874 to 883, 2006, and it does not come into direct contact with liquid water in the isotope exchange columns, requiring a rather complicated internal structure of the LPCE columns, a structure that allows the liquid water to bypass the catalyst bed, not coming into direct contact with the liquid water [9], K. M. Song, S. W. Paek and D. H. Ahn: Installation of Liquid phase catalytic exchange column for the Wolsong tritium removal facility - Fusion Engineering and Design, Vol. 82, p. 2264 to 2268, 2007.

A similar achievement was reported by Russian researchers from the Petersburg Institute of Nuclear Physics in cooperation with Mendeleev University in Moscow, namely a Platinum/Polysorb catalyst having a platinum concentration of 0.8 % Pt and a catalytic grain size of 0.5 to 1 mm, prepared by impregnation with hexachloro-platinic acid solution in acetone of organic copolymer (styrene-divinyl-benzene) with 40 % styrene content, followed by hydrogen reduction to catalytically active platinum [10], B. M. Andreev, M. B. Rozenchevici and Yu Sakharovskii: Isotope Separation method for Tritium Removal and Concentration in Nuclear Fuel Cycle - Radiochemistry, Vol. 39, No. 2, p. 95 to 108, 1997. The other physico-structural characteristics of the aforementioned catalyst were not disclosed but subsequent activity tests revealed a stability of up to 2.700 hours, after which time a catalyst regeneration procedure is required [11], I. A. Alekseev, S. D. Bodnarenko, O. A. Fedorcenko, et al.: Operating experience of the experimental industrial plant for reprocessing of tritiated wastes - Fusion Engineering and Design, Vol. 58 to 59, p. 439 to 443, 2001.

Recently, the researchers of the same team from Mendeleev University reported the achievement of two other types of Pt/C/PTFE and Pt/Alumina catalysts and their testing together with Pt/SDBC in determining the dependence of their catalytic activity on the concentration of deuterium and tritium [12], V. Tkacenko and M.B. Rozenkevich: Experimental Investigation of Concentration dependency of Hydrophobic catalyst performance in Reaction of Isotope Exchange between Water vapor and Hydrogen - Fusion science and technology, Vol. 71, p. 207 to 214, 2017. It has been noticed a different behaviour of the Pt/C/PTFE catalyst compared to the other two, namely a different reaction mechanism, a higher isotope exchange constant but also a certain instability in highly tritiated heavy water (caused by the high radiation field).

As regards the category of hydrophobic Platinum/Carbon and PTFE (Pt/C/PTFE) catalysts, of which our catalyst proposed for patenting belongs to, along with the achievements of the Canadian researchers mentioned above, better known and with more complete information are the achievements of the researchers from Belgium and Germany. Between the years 1975 and 1985, Belgian researchers at the SCK/CEN Mol Nuclear Research Centre prepared in the laboratory, in all three directions mentioned, more than 30 types of hydrophobic catalysts, mixing with PTFE commercial classical catalysts or prepared by them, based on Pt, Pd, Ni or Pt-Ni or Pt-Pd in various ratios and then subjected them to several mechanical treatments.

Therefore, according to the claims of the patent "Method for preparing an catalyst for an isotope exchange column" [13], US 4,376,066 A, the two components were mixed in ratios of 4 to 85 % platinized carbon and/or 96 to15 % PTFE powder, the content of catalytic active metal (metal from the platinum metal group) being between 0.5 to 10%, after which by pressing at 25 at/kg/cm$^2$ a thin pancake-like cake/sheet is made from which the catalyst is then cut out in the form of small cylindrical tablets, namely 1.9 to 3 mm in diameter and 2 mm high.

After the 2000s, the focus in the field was resumed in the sense of reproducing and improving the previous catalysts starting from the same patent but using new materials and conditions. Six new variants of catalysts have been developed [14], John Braet, Aime Bruggeman: Development of an Improved Hydrophobic Catalyst for Liquid phase Catalytic Exchange - 20-th Symposium on Fusion Engineering SOFE, San Diego CA, USA, 14 to17 October, 2003, in which the support for the catalytically active platinum is either graphite or different varieties of activated carbon. The catalysts prepared in this way were used to produce mixed catalytic packings, disordered by mixing with stainless steel spirals of close dimensions and tested in laboratory columns in the LPCE process of heavy water detritiation. The tests confirmed previous catalyst performances and that two catalysts coded MO1254 and MO1255 showed close but double performance relative to the 80s reference catalyst. Thereby, according to the tests conducted and reported [15], Aime Bruggeman, John Braet and Sven Vanderbisen: Water Detritiation - Better SCK CEN Catalysts for Liquid Phase Catalytic Exchange - Fusion Science and Technology, Vol. 48, p. 102 to 107, 2005, on a 0.5 m column, on a mixed catalytic packing, consisting of MO1254 coded catalyst (1.9 mm diameter and 2 mm height) and stainless steel metal spirals, hydrophilic in a volumetric ratio of 1 to 2 or 1 to 3, the measured isotope separation constant was between 93 and 139 Kmol/sm$^3$ and the catalyst was proposed as a candidate for heavy water detritiation at JET. No patents or other relevant information is known for the MO1254 and MO1255 coded catalysts other than those mentioned.

Also in the 1980s, German researchers J. H. Fiek, Romaker J. and Schindewolf U., reported [16] in "Tritium-Anreicherung durch Isotopen-Austausch zwischen Wasserstoff und Wasser mittels hydrophoben Katalysators für die Kernbrennstoff-Wiederaufbereitung" - Chem. Eng. Tech. 1980, 52, 892, the achievement and testing of a Pt/C/PTFE catalyst in the form of Rashig rings (10 x 10 x 2 mm), with a platinum concentration of 0.5 %, in a Pt/C PTFE mixing ratio of 1 to 25 parts and sintering at 305 °C. With the abandonment of the achievement of the German nuclear program, research in this field has been stopped and no articles or patents are known on the subject.

A new method to improve the performance of these types of catalysts belongs to Chinese researchers [17], Sheng Hu, L. P. Xiong and Xingbi Rena: Pt-Ir binary Hydrophobic catalyst: Effect of Ir content - International Journal of Hydrogen Energy, Vol. 34, p. 8723 to 8732, 2009, who have achieved in the laboratory a hydrophobic binary Platinum-Iridium catalyst with higher activity than the conventional platinum catalyst. The preparation process starts from the impregnation of carbon with a BET surface area of 230 m$^2$/g, with the acid precursor solutions of the two catalytically active elements, treatment after drying with a PTFE emulsion type 30-J (Dupont) and the production of a paste which is subsequently loaded onto the surface of a carrier support such as sponge nickel. The total content of active elements (platinum and iridium) was 20 %, (quite high) and information on its stability in contact with liquid water and especially with tritium radiation is missing.

Recently, Feng Huanga and Changgong from Dalian University of Technology (PR. China) reported the preparation of 3 types of hydrophobic catalysts two based on styrene divinylbenzene copolymer and one based on PTFE [18], Feng Huang, Changgong Meng: Hydrophobic platinum-polytetrafluoroetylene catalyst for Hydrogen isotope separation - International Journal of Hydrogen Energy, Vol.43, (20180) p. 1718-1724, prepared by direct deposition of platinum on polytetrafluoroethylene powder followed by pressing it in the form of rings (3 x 3 x 1.5 mm), the active metal content in all 3 types of catalysts being 0.8 % Pt. The PTFE-based catalyst maintained its stability for 100 days, while the SDB-based catalysts decreased their activity to 80 % of their original activity, due of course to the lower hydrophobicity of the organic copolymer.

Based on this state of the art, it is an object of the present invention to improve and optimize the hydrophobic catalyst manufacturing process with the aim of obtaining homogeneous and reproducible catalyst batches.

These objects are solved by the process of independent claim 1.

A further object is provision of an improved highly hydrophobic catalyst with a specific composition and physico-structural characteristics which confer it a high catalytic activity and a long-lasting structural and functional stability, even under conditions of direct contact with liquid water and exposure to a significant radiation field, such as tritium radiation.

These objects are achieved with the hydrophobic catalyst comprising platinum (Pt) on carbon (C) and polytetrafluoroethylene (PTFE) of independent claim 11.

A use of this catalyst is disclosed by independent claim 13.

Preferred embodiments are specified in the dependent claims.

According to a first embodiment an process according to the invention provides the manufacture of a hydrophobic catalyst comprising platinum on carbon (Pt/C) and polytetrafluoroethylene (PTFE), wherein the hydrophobic catalyst is designed in general for the promotion of chemical processes taking place in the presence of liquid water and/or water vapour, and in particular intended for the separation of hydrogen isotopes by catalytic chemical exchange between liquid water (tritiated water) and hydrogen (deuterium) gas. The manufacturing process comprises the steps of

- providing two basic raw material components, commercial platinized carbon (Pt/C) powder and polytetrafluoroethylene (PTFE) powder, in a mass ratio of one part to four parts, wherein the commercial platinized carbon (Pt/C) powder has a specific surface area greater than 500 $m^2$/g and the polytetrafluoroethylene (PTFE) powder has a crystallinity of more than 50 % and a specific surface area higher than 25 $m^2$/g, wherein the commercial platinized carbon (Pt/C) powder and the polytetrafluoroethylene (PTFE) powder have close dimensions below 350 $\mu$m;
- mixing and homogenization of the commercial platinized carbon (Pt/C) powder and the polytetrafluoroethylene (PTFE) powder, wherein both basic raw material components are first mixed manually and then homogenized mechanically with a paddle stirrer at a speed of 1300 to 2500 rpm, until a homogeneous mixture is obtained, wherein homogeneity of the mixture is checked visually and by electron microscopy (SEM);
- shaping the homogeneous mixture into forms suitable for use of the catalyst in the manufacture of mixed catalytic packings specific to the LPCE process by pressing in a single-station mould or in a multi-station mould at a pressure within the range 1 $N/mm^2$ to 3,5 $N/mm^2$,
- sintering the shaped catalyst in a controlled atmosphere of inert gas at a temperature in the softening temperature range of PTFE, which is 320 to 380 °C;
- subsequently washing the sintered catalyst until complete disappearance of potential traces of fluorine and adsorbed chlorine, and
- finally drying the washed catalyst at a temperature in a range of 130 to 170 °C,
- obtaining the hydrophobic catalyst having a bulk density between 0.45 and 0.55, a contact angle greater than 120°, a specific surface area higher than 80 $m^2$/g, and an active metal concentration of 1.5 to 2.5 % Pt.

With reference to potential traces of fluorine and chlorine, which are removed by the step of washing, it is noted that some traces of adsorbed chlorine could be contained in commercial Pt/carbon powder, remaining after the preparation of Pt/C as result of reduction step of hexachloro-platinic acid. On the other hand after the sintering step a few traces of fluorine could be also remained adsorbed as result of potential decomposition of PTFE.

So, the invention is related to a highly hydrophobic catalyst based on platinum containing carbon and PTFE (Pt/C/PTFE) and to the process for its manufacture, which catalyst is intended for the general application in any chemical, catalytic process occurring in the presence of moisture or liquid water and in particular in the process of deuterium and tritium separation by the hydrogen-liquid water isotope exchange process for the purpose of heavy water detritiation.

Because of its specific composition and its highly hydrophobic properties, the catalyst obtained by the claimed process accelerates the isotope transfer process and preserves the catalytic properties for a long time even under exposure to tritium radiation and direct contact with liquid water. Unlike classical hydrophilic catalysts that inactivate quickly upon contact with liquid water vapour, hydrophobic catalysts are those metal/support type catalysts which, due to their specific porosity, allow the access of reactants (gases, water vapour, etc.) to the active metal, but because of the high hydrophobicity of the binding agent, they reject the access of liquid water, being able to operate in direct contact with liquid water and maintaining their catalytic activity for a long time.

According to another embodiment of the process according to the invention, the step of providing the commercial platinized carbon (Pt/C) powder and the polytetrafluoroethylene (PTFE) powder comprises the step of

- sieving the raw materials, the commercial platinized carbon (Pt/C) powder and the polytetrafluoroethylene (PTFE) powder, preferably using a system of granulometric sieves, wherein a majority fraction with dimensions in the range 160 to 350 μm, is sorted by size for each raw material.

According to a further embodiment, the process according to the invention may comprise that

- the commercial platinized carbon (Pt/C) powder comprises platinum on activated carbon having a concentration of 10 % Pt, and/or
- the polytetrafluoroethylene (PTFE) powder has a specific surface area higher than 30 $m^2/g$, and/or
- the close dimensions of the commercial platinized carbon (Pt/C) powder and the polytetrafluoroethylene (PTFE) powder are below 300 μm, preferably below 200 μm.

The step of mixing the commercial platinized carbon (Pt/C) powder and the polytetrafluoroethylene (PTFE) powder may comprise in further embodiments of the process according to the invention that

- manually mixing is performed by hand with a rod until the colour of the mixture becomes uniform; and/or
- mechanically mixing is performed at least for 5 to 10 minutes using the electric paddle stirrer at a speed of 1500 to 1800 rpm, preferably 1700 rpm; and/or
- checking the homogeneity of the mixture by electron microscopy (SEM) is performed, if the visual check comprising placing of a mixture sample on a white sheet of paper confirms the uniformity of the colour of the mixture, which colour is dark grey to black, otherwise, if the visual check results in that the colour of the mixture is not uniform, mechanically mixing is continued until a more uniform colour is obtained, after which it is also checked by electron microscopy (SEM), wherein the homogenization continues until a SEM image confirms the homogeneity of the mixture.

According to yet another embodiment of the process according to the invention, the step of shaping the homogeneous mixture comprises that

- the forms into which the homogeneous mixture is shaped are tablets or rings, and/or
- shaping the homogeneous mixture by pressing is performed at a pressure of 2.2 $N/mm^2$.

Another embodiment of the process according to the invention refers to the step of sintering, which may comprise that

- sintering is conducted in a furnace or heater, configured to supply the controlled atmosphere of inert gas, which preferably is nitrogen or helium, and a heating temperature regime in the range of 200 to 800 °C, wherein the furnace comprises a tray or tube for introduction of the shaped catalyst into the furnace after reaching the appropriate sintering temperature, and/or
- the shaped catalyst is kept sintering in the furnace for 25 minutes in the sintering furnace in the thermal range of 320 to 380 °C.

According to yet another embodiment of the process according to the invention, the step of sintering is followed by rapid cooling to room temperature, which preferably is performed by removing of the tube with the catalyst outside the furnace, increasing a flow of the inert gas in order to enhance the cooling rate of the tube and the catalyst, wherein the nitrogen feed is turned off when the tube reaches room temperature, and the sintered catalyst is discharged on a sieve with a mesh larger than 2 mm.

A still further embodiment of the process according to the invention comprises that after cooling to room temperature, the cooled catalyst is screened on the sieve with gentle movements, wherein dust and potential burrs are collected in an appropriate container for the collection of catalytic residues and waste, and the directly pre-washed on the sieve under running tap water for 2 to 3 minutes.

And with reference to the step of washing the sintered catalyst, in another embodiment the process according to the invention comprises that

- the pre-washed catalyst is transferred from the sieve into a flask and washed with demineralised water by shaking the flask for 3 to 5 minutes with breaks of 10 minutes, the wash water being thrown away, and
- the washing operation with demineralised water in the flask is repeated for one hour, after which the presence of fluorine and chlorine ions in the last wash water is checked, and if chlorine ions are identified in the last wash water, the water is removed from the wash flask and a new volume of wash water is added, repeating the operation of washing with demineralised water in the flask until no more chlorine ions are qualitatively identified in the wash water.

Another embodiment of the process according to the invention refers to the step of drying, which comprises pre-drying by leaving the catalyst on a sieve for 30 to 60 minutes, which afterwards is placed in an oven for drying at 150 °C for 3 to 4 hours, wherein after drying, the sieve is removed and allowed to cool and, 5-10 minutes after reaching room temperature, the sieve is weighed and then reintroduced in the oven to dry again under similar conditions for a minimum of one hour, after which the sieve is reweighed, the operation continuing until constant weight is reached, after which the hydrophobic catalyst is packaged and labelled.

Manufactured by such a process, the hydrophobic catalyst comprising platinum on carbon (Pt/C) and polytetrafluoroethylene (PTFE), which is designed in general for the promotion of chemical processes taking place in the presence of liquid water and/or water vapour, and in particular intended for the separation of hydrogen isotopes by catalytic chemical exchange between liquid water (tritiated water) and hydrogen (deuterium) gas, has a bulk density between 0.45 and 0.55, a contact angle greater than 120°, a specific surface area higher than 80 $m^2$/g, and an active metal concentration of 1.5 - 2.5 % Pt.

According to a preferred embodiment, the inventive hydrophobic catalyst has an active metal concentration of 2 % Pt and/or a bulk density of 0.5 $g/cm^3$.

Herein, an inventive hydrophobic catalyst comprising platinum on carbon (Pt/C) and polytetrafluoroethylene (PTFE) is used for the promotion of chemical processes taking place in the presence of liquid water and/or water vapour, and in particular for the separation of hydrogen isotopes by catalytic chemical exchange be-tween liquid water (tritiated water) and hydrogen (deuterium) gas.

The main advantages of the invention are the manufacture of highly hydrophobic, homogeneous, reproducible catalyst batches with physico-textural characteristics and catalytic activity superior to other similar known catalysts, long-lasting stability in direct contact with liquid water and/or exposure to radiation, thereby making chemical, catalytic processes occurring in the presence of liquid water and/or vapour economically feasible.

Further objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1    shows steps of the Pt/C/PTFE catalyst manufacturing process,
Fig. 2    shows a SEM image of the homogeneous Pt/C and PTFE mixture,
Fig. 3    shows an image of the hydrophobic Pt/C/PTFE catalyst.

The invention relates to a hydrophobic platinum-on-carbon-polytetrafluoroethylene (Pt/C/PTFE) catalyst and to a method for its manufacture, characterized in that the two basic components, platinized carbon (Pt/C) and polytetrafluoroethylene (PTFE), are mixed in a mass ratio of one to four parts, the final catalyst having a contact angle greater than 120° and a specific surface area greater than 80 $m^2$/g, an active metal concentration of 1.5 to 2.5 % Pt, wherein 2 % Pt is preferred, and manufactured in four main steps:

- mixing/homogenizing raw materials;
- shaping by pressing;
- sintering in inert gas atmosphere;
- washing/drying.

For increasing the specific surface area, porosity and homogeneity, raw materials are used in the form of small and very close together powders, which are mixed and homogenised, then the mixture is pressed in special moulds with one or more pressing stations at an optimum pressing force in the form of rings or tablets preferably, followed by the sintering operation which is performed in a controlled atmosphere of inert gas in the thermal range of the PTFE softening. Finally, operations are carried out to wash the catalyst for the removal of traces of remaining gas (fluorine, chlorine) as dissolved ions, drying and physical-textural characterization of the catalyst.

The novelty of the invention lies in the superior physico-textural characteristics of the Pt/C/PTFE catalyst, characteristics conferred both by its composition, the features of the raw materials used, the conditions and parameters of the manufacturing stages and its hydrophobicity and high stability in the radiation field.

Therefore, for obtaining a hydrophobic catalyst with such superior characteristics in the mixing step, commercial platinized carbon (Pt/C) powder, preferably with a concentration of 10 % Pt, having a specific surface area greater than 500 $m^2$/g and polytetrafluoroethylene (PTFE) powder with a specific surface area of more than 25 $m^2$/g, preferably more than 30 $m^2$/g, and a crystallinity of more than 50 % are used, both powders with close dimensions, ($\leq$ 350 $\mu$m, preferably $\leq$ 300 $\mu$m, and most preferred $\leq$ 200 $\mu$m), are mixed and homogenised with a paddle stirrer at a speed of 1300 to 2500 rpm, the homogenous mixture being pressed at a pressure in the range 1 N/$mm^2$ to 3.5 N/$mm^2$, after which it is sintered in a controlled atmosphere of inert gas (nitrogen, helium, etc.) in the thermal range of PTFE softening (320 to 380 °C), then washed until potential traces of fluorine and chlorine are removed

The advantages of the present invention consist in the manufacture of highly hydrophobic, homogeneous, reproducible catalyst batches with high physico-textural characteristics and catalytic activity, long-lasting stability on exposure to radiation, making it economically feasible to conduct chemical, catalytic processes in the presence of liquid water and/or vapour. The high specific surface area of Pt/C powder makes the reactants easily accessible to the catalytically active metal, the high specific surface area of platinum gives the catalyst high catalytic activity in promoting the isotope exchange process. The high hydrophobicity and crystallinity of the PTFE used, in combination with the conditions and the value of the manufacturing parameters, confer long-lasting stability even under exposure to radiation and direct contact with liquid water.

The relatively low platinum content in conjunction with the superior catalytic activity and all the other advantages mentioned above contribute to the simplification of the heavy water detritiation process (through the deuterium-tritiated water isotope exchange process - LPCE) as well as to the significant reduction of investment costs.

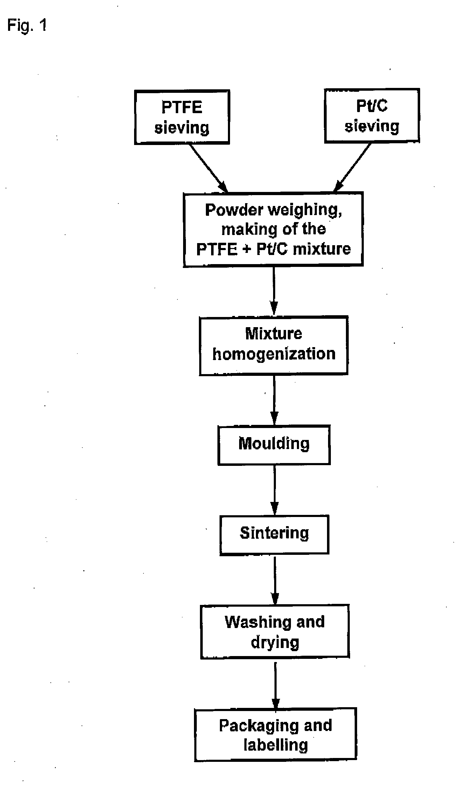

The manufacturing of the Pt/C/PTFE catalyst is performed according to the flow chart in Figure 1 and comprises the following stages:

- sieving of powder materials to compatible, selected sizes;
- weighing the materials (platinum on carbon and PTFE) in the necessary mixing ratio;
- mixing and homogenizing the platinized carbon-PTFE mixture in the specified ratio;
- moulding the powder into tablets/cylindrical rings;
- sintering of the shaped catalyst;
- washing/drying and packaging;

For the production of platinum catalyst on carbon and PTFE according to a preferred embodiment, the following raw materials are mainly required:

- platinum on activated carbon, 10 % Pt, powder with a specific surface area greater than 500 $m^2$/g, and
- polytetrafluoroethylene (PTFE) powder, with a specific surface area greater than 25 $m^2$/g and crystallinity higher than 50 %, materials that must meet the quality conditions set out in the STASs and specific technical standards, having the best commercial quality.

The first stage of catalyst manufacturing is the sieving of the raw materials, an operation intended to break up potential agglomerations in the case of PTFE and to ensure that the two raw material powders are as close as possible in size. Using a classic system of granulometric sieves, the majority fraction, namely that with dimensions in the range 0.16 to 0.35 mm, is sorted by size for each raw material.

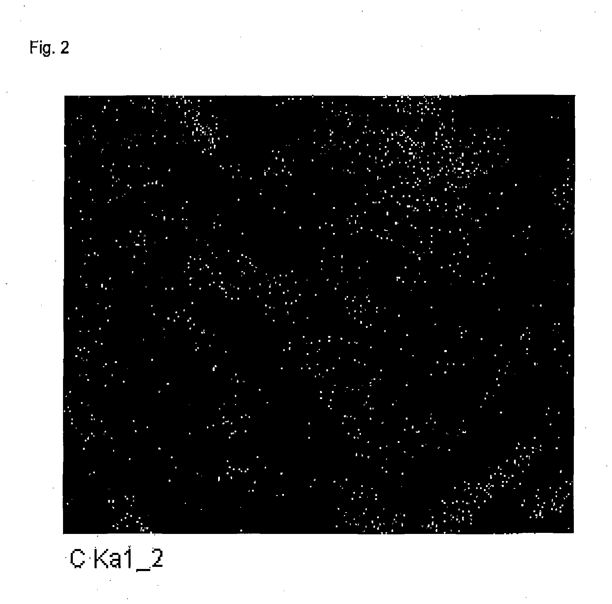

In order to make the mixture of the two raw materials, the corresponding quantities are weighed on an analytical balance from the mentioned granulometric fraction, namely for the manufacture of a 1 kg Pt/C/PTFE catalyst batch, 200 g platinum powder on carbon, 10 % Pt, and 800 g PTFE are weighed separately. After that, a layer of PTFE powder is poured into a glass or plastic pot with a diameter of 200 to 300 mm over the entire surface of the pot, then a layer of platinum powder on carbon is poured over the entire surface of the PTFE and continued alternately, in a similar way with other layers until the quantities of raw material are used up, and then the entire mixture is homogenised by hand with a rod until the colour becomes uniform. The mixture is then transferred to a tall Berzelius beaker and homogenised for 5 to 10 minutes using an electric paddle stirrer at a speed of 1500 to 1800 rpm 4 to 6 spatulas of the mixture are taken and placed on a white sheet of paper and visually checked the uniformity of the colour of the mixture. If the colour of the mixture is dark grey to black and uniform, the appropriate amount of sample is taken and the homogeneity of the mixture is checked/validated by SEM image (electron microscopy). If the colour of the mixture is not uniform, any clumps should be removed with a spatula and homogenisation continued until a more uniform colour is obtained, after which it is also checked/certified by electron microscopy. The homogenization continues until the SEM image confirms the homogeneity of the mixture as in Figure 2. After certification of homogenization, the mixture is then submitted to the shaping operation which involves moulding the mixture of powders in an appropriate mould with a single or multiple stations. The catalyst can be shaped into various forms and sizes, one example being cylindrical tablets with a diameter of 3.4 mm and a height of 10 to 14 mm, suitable for use of the catalyst in the manufacture of mixed catalytic packings specific to the LPCE process.

The shaping is carried out in a single-station mould or for increased manufacturing productivity in moulds with 3 to 10 stations as in the patent application RO 134 820 A0, "Process and device for moulding/forming hydrophobic catalysts from platinum and PTFE impregnated carbon" [19].

The mould body is filled with the appropriate quantity of mixture and then the mixture is pressed by operating the mould piston with a force of 2.2 N/mm$^2$. The catalyst ring/tablets are then ejected from the body of the mould into the sintering tray or cylindrical tube, depending on the type of furnace used/available.

Catalyst sintering is the operation by which the catalyst is heated to the temperature range of the PTFE softening point, followed by rapid cooling to room temperature in order to preserve the shape and increase the mechanical strength of the catalyst tablets. The sintering operation is conducted in any type of furnace/heater, which can supply a controlled atmosphere of inert gas (nitrogen) and a heating temperature regime in the range 200 to 800 °C. 10 minutes after reaching the appropriate sintering temperature, the tray/tube with the shaped catalyst is introduced into the furnace, ensuring an inert gas atmosphere (nitrogen, helium, etc.) which prevents self-ignition of the catalyst and avoids potential agglomeration of the platinum particles.

The catalyst is kept sintering for 25 minutes in the sintering furnace in the thermal range, 320 to 380 °C after which it is removed for cooling outside the furnace. For cooling the catalyst, the sintering tube is removed outside the furnace, increasing the flow of inert gas (nitrogen) in order to enhance the cooling rate of the tube and catalyst. When the tube reaches room temperature (after about 45 minutes), the nitrogen feed is turned off, and the sintered catalyst is discharged on a sieve with a mesh larger than 2 mm.

The catalyst thus cooled is screened with gentle movements, after which dust and potential burrs are collected in the appropriate container for the collection of catalytic residues and waste. The catalyst is then pre-washed directly on the sieve under running tap water for 2 to 3 minutes, after which the pre-washed catalyst is transferred from the sieve into a 5 to 6 litre flask for washing with demineralised water. The flask is then shaken vigorously for 3 to 5 minutes with breaks of 10 minutes, the wash water being thrown away, repeating the operation for one hour, after which the presence of fluorine and chlorine ions in the last wash water is checked.

If fluorine and/or chlorine ions are identified in the last wash water, the water is removed from the wash flask and a new volume of wash water is added, repeating the operation until no more fluorine and, resp., chlorine ions are qualitatively identified in the wash water. The catalyst is again transferred from the wash flask onto a sieve with a mesh size greater than 0.5 mm and left to pre-dry for 30-60 minutes, after which it is placed in an oven to dry at 150 °C for 3 to 4 hours. The catalyst sieve is removed and allowed to cool and, 5 to 10 minutes after reaching the room temperature, the catalyst sieve is weighed. It is then reintroduced to dry again under similar conditions for a minimum of one hour, after which it is reweighed, the operation continuing until constant weight is reached, after which the catalyst is packaged and labelled accordingly.

The appropriate quantities of sample are taken and physical and structural characterisation is performed, namely BET specific surface area, specific surface area of metallic platinum, bulk density, contact angle, etc.

The tritium radiation stability of the catalyst hence prepared and characterized was tested by exposure to a gamma radiation field at 25, 50 and 75 KGy, similar to a 40-year direct contact exposure to 70 Ci/kg tritiated water, the spectral and chemical measurements showing no structural or strength changes [20], Cristian Postolache: Testing of Pt/C/PTFE hydrophobic catalyst at three radiation levels' exposure a - Raport intern ICSI Nr.13 326/2021.

In comparison with the mentioned Romanian patent RO 107 842 B1 but also with other types of hydrophobic catalysts and processes for their preparation from the state of the art, the present invention has the following considerable advantages:

- the physico-textural characteristics of the catalyst are fully specified, verified and superior to other catalysts in the literature;
- by using raw materials with well-defined physico-textural characteristics as minimum values, homogeneous and reproducible shards with improved catalytic activity are achieved;
- mixing the two components only in the specified granulometric size range and at the mentioned parameters facilitates homogenisation and ensures increased porosity and pressing the mixture at such a low pressing force, as to give the minimum mechanical strength required for handling during the sintering stage, which in turn ensures a high specific surface area and therefore higher catalytic activity. The previously patented Romanian and Belgian catalysts, manufactured at higher pressing forces, had much smaller specific surface areas and consequently lower performance;
- the sintering operation carried out in an inert atmosphere at 360°C obviously contributes to avoiding/reducing self-ignition of the mixture and local re-sintering of the platinum particles;
- a major advantage of using the catalyst in a high radiation field is its proven stability, which is particularly conferred by the over 50 % degree of crystallinity of the PTFE in its composition.

- by the manufacturing process the patented catalyst can be easily phased to dimensions compatible with the fold dimensions of metal hydrophilic packings and can be easily inserted into such a packing, producing mixed, compact, two-in-one catalytic packings.
- compared to the Belgian and styrene-divinyl-benzene based catalysts which have very small dimensions and whose mixed catalytic packings in alternating bed present high pressure drops and the risk of flooding in operation, the patented Pt/C/PTFE catalyst poses a much lower risk for such disruptive phenomena.

Even though the isotope separation performance of catalysts is sometimes difficult to compare because of performing the tests at different parameters or not providing all the necessary information for comparison, the published data show that the catalyst of the present invention has a better performance than catalysts prepared in other countries. Therefore, at the Karlsruhe Institute in Germany, mixed catalytic packings, alternating based on platinum catalyst types supported on carbon and PTFE or platinum on styrene-divinyl-benzene, manufactured in Russia, Belgium, Japan and Romania, were tested under similar conditions, the packing based on the catalyst produced at ICSI having the best separation performance [21], I. Cristescu, U. Tamm, Ioana-R. Cristescu, M. Glugla, C. J. Caldwell-Nichols: Investigation of simultaneous tritium and deuterium transfer in a catalytic isotope exchange column for water detritiation - Fusion Engineering and Design 61-62, p. 537-542, 2002.

Recent tests carried out [22], G. Ionita, A. Bornea, I. Spiridon, Popescu Gh. et al. - Experimental report on testing Module 100 within Experimental TRF - No. 118/16 07 2013, on the new mixed catalytic packing - COMPACK CP-001, containing in its composition the present patented Pt/C/PTFE catalyst, have confirmed its superior performance, namely values of the isotope exchange constant (Ks) of more than 350 kmol/m$^3$h compared to the isotope exchange constants of the other catalysts which are significantly below this value.

The catalyst of the present invention has also the advantage that it can be easily used in the manufacture of compact, two-in-one mixed catalytic packings, meaning that it can be easily inserted into the folds of a classical hydrophilic packing, helping to reduce the size of LPCE columns, such as presented by the authors in another patent application RO 134 746 A0 on the manufacture of a compact mixed catalytic packing [23].

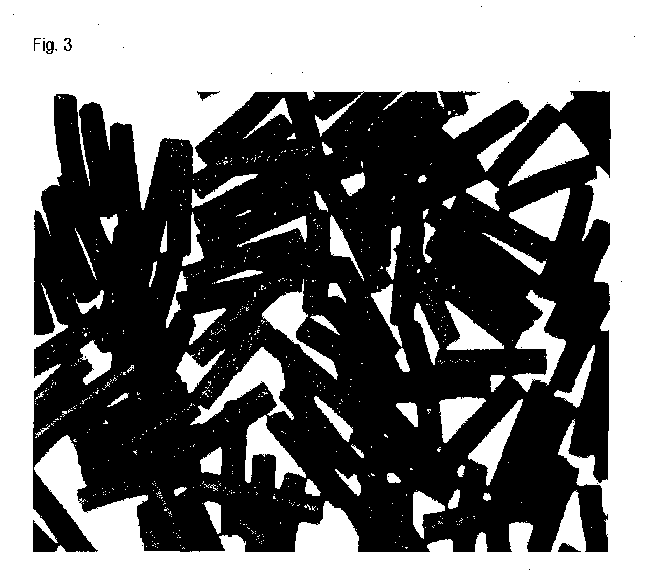

Hence, a hydrophobic platinum catalyst on carbon and polytetrafluoroethylene (Pt/C/PTFE), as shown in Figure 3, designed in general for the promotion of chemical processes taking place in the presence of liquid water and/or water vapour, and in particular intended the separation of hydrogen isotopes by catalytic chemical exchange between liquid water (tritiated water) and hydrogen (deuterium) gas, is obtained by the described process for its manufacture, wherein the two basic components, platinized carbon (Pt/C) and polytetrafluoroethylene (PTFE) are in a mass ratio of one part to four parts, the final catalyst having a bulk density between 0.45 and 0.55, preferably 0.5 g/cm$^3$, a contact angle greater than 120°, a specific surface area higher than 80 m$^2$/g and an active metal concentration of 1.5 to 2.5 % Pt, preferably 2 % Pt, and which is manufactured in four distinct stages: mixing/homogenisation of raw materials; shaping by pressing; sintering in an inert gas atmosphere and washing/drying.

Said process for the manufacture of hydrophobic platinum catalyst on carbon and polytetrafluoroethylene (Pt/C/PTFE), comprises that in the mixing stage, it uses commercial platinized carbon (Pt/C) powder with a specific surface area greater than 500 m$^2$/g, and polytetrafluoroethylene (PTFE) powder with a crystallinity of more than 50 % with a specific surface area preferably higher than 30 m$^2$/g, both powders having close dimensions, preferably below 200 $\mu$m, both raw materials are first mixed manually and then mechanically with a paddle stirrer at a speed of 1300 to 2500 rpm, preferably 1700 rpm, the homogeneity of the mixture being checked visually and by electron microscopy (SEM), and the homogeneous mixture is then shaped into tablets or rings by pressing in a multi-station mould at a pressure within the range 1 N/mm$^2$ to 3.5 N/mm$^2$, preferably: 2.2 N/mm$^2$, sintered in a controlled atmosphere of inert gas (nitrogen, helium, etc.), in the softening temperature range of PTFE (320 to 380 °C), subsequently washed until complete disappearance of potential traces of fluorine and adsorbed chlorine and finally dried at 130 to 170 °C, preferably at 150 °C.

BIBLIOGRAPHY

[1] Murphy, G. ,M. - Production of heavy water, Editura McGrawhill, New York, p. 9-52, 1955

[2] W. H. Stevens - Canadian Patent No. 907 292, 1972

[3] J. P. Butler, J. H Rolston and W. H. Stevens - Novel catalysts for Isotopic Exchange between Hydrogen and Liquid water in Separation of Hydrogen Isotopes - ACS Symposium Series 68, Washington DC, 1977

[4] Patent RO 107842 - Procedeu de preparare a catalizatorilor de platină hidrofobi- Gheorghe Ionita and Marius Peculea

[5] Patent RO 113 218 B1 - Umplutură catalitică pentru coloanele d e schimb izotopic, Marius S Să bin Peculea and Doina Maria Stefanescu;

[6] Patent RO107558 - Umplutură catalitică pentru arderea amestecurilor de hidrogen și- Gheorghe Ionita and Marius Să bin Peculea;

[7] SEUNWOO Paek Do-Hee Ahn et al. - The performance of a trickle-bed reactor packed with a Pt/SDBC catalyst mixture for the CECE process in Fusion Engineering Design, Vol. 82 (15), p. 2252-2258, 2007

[8] Soon Hwan Sohn and Kun Jae Lee - Deactivation of Hydrophobic Pt/SDBC in the WTRF LPCE Column for tritium Separation in Journal of Nuclear Science and technology, Vol. 43, No: 8, p. 874-883, 2006

[9] K. M. Song, S. W. Paek and D. H. Ahn - Installation of Liquid phase catalytic exchange column for the Wolsong tritium removal facility in Fusion Engineering and Design 82, p. 2264-2268, 2007

[10] B. M. Andreev, M. B. Rozenchevici and Yu Sakharovskii - Isotope Separation method for Tritium Removal and Concentration in Nuclear Fuel Cycle, Radiochemistry, Vol. 39, No. 2, p.95-108, 1997

[11] I. A. Alekseev, S. D. Bodnarenko, O. A. Fedorcenko et al. - Operating experience of the experimental industrial plant for reprocessing of tritiated wastes in Fusion Engineering and design, Vol 58-59, p. 439-443, 2001

[12] V. Tkacenko and M. B. Rozenkevich - Experimental Investigation of Concentration dependency of Hydrophobic catalyst performance in Reaction of Isotope Exchange between Water vapor and Hydrogen in Fusion science and technology, Vol 71, p. 207-214, 2017

[13] Aime Brugeman, Philipe Vermeiren et al. - Method for preparing a catalyst for an isotopic exchange column- US 4,376,066 A, 1983

[14] John Braet, Aime Bruggeman - Development of an Improved Hydrophobic Catalyst for Liquid phase Catalytic Exchange in 20-th Symposium on Fusion Engineering SOFE, San Diego CA, USA, 14-17 October 2003

[15] Aime Bruggeman, John Braet and Sven Vanderbisen - Water Detritiation - Better SCK.CEN Catalysts for Liquid Phase Catalytic Exchange in Fusion Science and Technology, Vol. 48, p. 102 -107, 2005

[16] Fieck, H. J.; Romaker, J.; Schindewolf, U. - Tritium-Anreicherung durch Isotopen-Austausch zwischen Wasserstoff und Wasser mittels Hydrophoben Katalysators für die Kernbrennstoff-Wiederaufbereitung. Chem. Eng. Tech. 1980, 52, 892.

[17] Sheng Hu, L. P. Xiong and Xingbi Rena - Pt-Ir binary Hydrophobic catalyst: Effect of Ir content, International Journal of Hydrogen Energy, Vol. 34, 2009, p. 8723-8732

[18] Feng Huanga and Changgong Meng - Hydrophobic platinum-polytetrafluoroetylene catalyst for Hydrogen isotope separation, International Journal of Hydrogen Energy vol.43 (20180), p. 1718-1724

[19] Patent Application RO 134 820 A0: Procedeu și dispozitiv de matriţare/formare a catalizatorilor hidrofobi din cărbune impregnat cu platină și Teflon, Nicolae Sofilca, Gheorghe Ionita, Ionut Spiridon

[20] Cristian Postolache Raport intern ICSI Nr.13 326/2021 - Testare catalizator hidrofob in câmp de radiaţtii la 3 praguri de doză

[21] I. Cristescu, U. Tamm, Ioana-R. Cristescu, M. Glugla, C. J. Caldwell-Nichols, Investigation of simultaneous tritium and deuterium transfer in a catalytic isotope exchange column for water detritiation, Fusion Engineering and Design 61-62 (2002) 537-542.

[22] G. Ionita, A. Bornea, I. Spiridon, Popescu Gh. si altii - Raport de experimentare a Modulului 100 din cadrul TRF-nr.118/16 07 2013;

[23] Patent application RO 134 746 A0: - Umplutură catalitică mixtă compactă - Gheorghe Ioniţa, Constantin Ciortea și Gheorghe Titescu.

## Claims

1. Process for the manufacture of a hydrophobic catalyst comprising platinum on carbon (Pt/C) and polytetrafluoroethylene (PTFE), wherein the hydrophobic catalyst is designed in general for the promotion of chemical processes taking place in the presence of liquid water and/or water vapour, and in particular intended for the separation of hydrogen isotopes by catalytic chemical exchange between liquid tritiated water and deuterium gas, **comprising the steps of**

- providing two basic raw material components, commercial platinized carbon (Pt/C) powder and polytetrafluoroethylene (PTFE) powder, in a mass ratio of one part to four parts, wherein the commercial platinized carbon (Pt/C) powder has a specific surface area greater than 500 m$^2$/g and the polytetrafluoroethylene (PTFE) powder has a crystallinity of more than 50 % and a specific surface area higher than 25 m$^2$/g, wherein the commercial platinized carbon (Pt/C) powder and the polytetrafluoroethylene (PTFE) powder have close dimensions below 350 $\mu$m;

- mixing and homogenization of the commercial platinized carbon (Pt/C) powder and the polytetrafluoroethylene (PTFE) powder, wherein both basic raw material components are first mixed manually and then homogenized mechanically with a paddle stirrer at a speed of 1300 to 2500 rpm, until a homogeneous mixture is obtained, wherein homogeneity of the mixture is checked visually and by electron microscopy (SEM);

- shaping the homogeneous mixture into forms suitable for use of the catalyst in the manufacture of mixed catalytic packings specific to the LPCE process by pressing in a single-station mould or in a multi-station mould at a pressure within the range 1 N/mm$^2$ to 3,5 N/mm$^2$,

- sintering the shaped catalyst in a controlled atmosphere of inert gas at a temperature in the softening temperature range of PTFE, which is 320 to 380 °C;

- subsequently washing the sintered catalyst until complete disappearance of potential traces of fluorine and adsorbed chlorine, and

- finally drying the washed catalyst at a temperature in a range of 130 to 170 °C,

- obtaining the hydrophobic catalyst having a bulk density between 0.45 and 0.55, a contact angle greater than 120°, a specific surface area higher than 80 m$^2$/g, and an active metal concentration of 1.5 to 2.5 % Pt.

**2.** Process according to claim 1, wherein the step of providing the commercial platinized carbon (Pt/C) powder and the polytetrafluoroethylene (PTFE) powder comprises the step of

- sieving the raw materials, the commercial platinized carbon (Pt/C) powder and the polytetrafluoroethylene (PTFE) powder, preferably using a system of granulometric sieves, wherein a majority fraction with dimensions in the range 160 to 350 $\mu$m, is sorted by size for each raw material.

**3.** Process according to claim 1 or 2, wherein

- the commercial platinized carbon (Pt/C) powder comprises platinum on activated carbon having a concentration of 10 % Pt, and/or

- the polytetrafluoroethylene (PTFE) powder has a specific surface area higher than 30 m$^2$/g, and/or

- the close dimensions of the commercial platinized carbon (Pt/C) powder and the polytetrafluoroethylene (PTFE) powder are below 300 $\mu$m, preferably below 200 $\mu$m.

**4.** Process according to at least one of claims 1 to 3, wherein the step of mixing the commercial platinized carbon (Pt/C) powder and the polytetrafluoroethylene (PTFE) powder comprises that

- manually mixing is performed by hand with a rod until the colour of the mixture becomes uniform; and/or

- mechanically mixing is performed at least for 5 to 10 minutes using the electric paddle stirrer at a speed of 1500 to 1800 rpm, preferably 1700 rpm; and/or

- checking the homogeneity of the mixture by electron microscopy (SEM) is performed, if the visual check comprising placing of a mixture sample on a white sheet of paper confirms the uniformity of the colour of the mixture, which colour is dark grey to black, otherwise, if the visual check results in that the colour of the mixture is not uniform, mechanically mixing is continued until a more uniform colour is obtained, after which it is also checked by electron microscopy (SEM), wherein the homogenization continues until a SEM image confirms the homogeneity of the mixture.

**5.** Process according to at least one of claims 1 to 4, wherein the step of shaping the homogeneous mixture comprises that

- the forms into which the homogeneous mixture is shaped are tablets or rings, and/or

- shaping the homogeneous mixture by pressing is performed at a pressure of 2.2 N/mm$^2$.

**6.** Process according to at least one of claims 1 to 5, wherein the step of sintering comprises that

- sintering is conducted in a furnace or heater, configured to supply the controlled atmosphere of inert gas, which preferably is nitrogen or helium, and a heating temperature regime in the range of 200 to 800 °C, wherein the furnace comprises a tray or tube for introduction of the shaped catalyst into the furnace after reaching the appropriate sintering temperature, and/or
- the shaped catalyst is kept sintering in the furnace for 25 minutes in the sintering furnace in the thermal range of 320 to 380 °C.

7. Process according to at least one of claims 1 to 6, wherein the step of sintering is followed by rapid cooling to room temperature, which preferably is performed by removing of the tube with the catalyst outside the furnace, increasing a flow of the inert gas in order to enhance the cooling rate of the tube and the catalyst, wherein the nitrogen feed is turned off when the tube reaches room temperature, and the sintered catalyst is discharged on a sieve with a mesh larger than 2 mm.

8. Process according to claims 7, wherein after cooling to room temperature the cooled catalyst is screened on the sieve with gentle movements, wherein dust and potential burrs are collected in an appropriate container for the collection of catalytic residues and waste, and the directly pre-washed on the sieve under running tap water for 2 to 3 minutes.

9. Process according to claim 8, wherein the step of washing the sintered catalyst comprises that

- the pre-washed catalyst is transferred from the sieve into a flask and washed with demineralised water by shaking the flask for 3 to 5 minutes with breaks of 10 minutes, the wash water being thrown away, and
- the washing operation with demineralised water in the flask is repreated for one hour, after which the presence of chlorine ions in the last wash water is checked, and if chlorine ions are identified in the last wash water, the water is removed from the wash flask and a new volume of wash water is added, repeating the operation of washing with demineralised water in the flask until no more chlorine ions are qualitatively identified in the wash water.

10. Process according to at least one of claims 1 to 9, wherein the step of drying comprises pre-drying by leaving the catalyst on a sieve for 30 to 60 minutes, which afterwards is placed in an oven for drying at 150 °C for 3 to 4 hours, wherein after drying, the sieve is removed and allowed to cool and, 5-10 minutes after reaching room temperature, the sieve is weighed and then reintroduced in the oven to dry again under similar conditions for a minimum of one hour, after which the sieve is reweighed, the operation continuing until constant weight is reached, after which the hydrophobic catalyst is packaged and labelled.

11. Hydrophobic catalyst comprising platinum on carbon (Pt/C) and polytetrafluoroethylene (PTFE), wherein the hydrophobic catalyst is designed in general for the promotion of chemical processes taking place in the presence of liquid water and/or water vapour, and in particular intended for the separation of hydrogen isotopes by catalytic chemical exchange between liquid tritiated water and deuterium gas,
**characterized in that**
the hydrophobic catalyst is manufactured by a process according to at least on of claims 1 to 10, wherein the hydrophobic catalyst has a bulk density between 0.45 and 0.55, a contact angle greater than 120°, a specific surface area higher than 80 m$^2$/g, and an active metal concentration of 1.5 - 2.5 % Pt.

12. Hydrophobic catalyst according to claim 11, wherein the hydrophobic catalyst has an active metal concentration of 2 % Pt and/or a bulk density of 0.5 g/cm$^3$.

13. Use of a hydrophobic catalyst comprising platinum on carbon (Pt/C) and polytetrafluoroethylene (PTFE) according to claim 11 or 12 for the promotion of chemical processes taking place in the presence of liquid water and/or water vapour, and in particular for the separation of hydrogen isotopes by catalytic chemical exchange between liquid tritiated water and deuterium gas.

Fig. 1

```
  ┌──────────┐              ┌──────────┐
  │   PTFE   │              │   Pt/C   │
  │  sieving │              │  sieving │
  └────┬─────┘              └─────┬────┘
       │                          │
       └──────────┐   ┌───────────┘
                  ▼   ▼
        ┌─────────────────────────┐
        │     Powder weighing,    │
        │      making of the      │
        │   PTFE + Pt/C mixture   │
        └────────────┬────────────┘
                     │
                     ▼
        ┌─────────────────────────┐
        │         Mixture         │
        │      homogenization     │
        └────────────┬────────────┘
                     │
                     ▼
        ┌─────────────────────────┐
        │        Moulding         │
        └────────────┬────────────┘
                     │
                     ▼
        ┌─────────────────────────┐
        │        Sintering        │
        └────────────┬────────────┘
                     │
                     ▼
        ┌─────────────────────────┐
        │       Washing and       │
        │         drying          │
        └────────────┬────────────┘
                     │
                     ▼
        ┌─────────────────────────┐
        │      Packaging and      │
        │        labelling        │
        └─────────────────────────┘
```

Fig. 2

C Ka1_2

Fig. 3

Europäisches
Patentamt

European
Patent Office

Office européen
des brevets

**EUROPEAN SEARCH REPORT**

Application Number

**EP 22 00 0240**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | RO 107 842 B1 (UZINA G [RO]) 31 January 1994 (1994-01-31) | 1-13 | INV. B01J21/18 |
| Y | * claims; examples; tables * | 1-10 | B01J23/42 B01J35/00 |
| | ----- | | B01J35/02 |
| X,D | US 4 376 066 A (BRUGGEMAN AIME E [BE] ET AL) 8 March 1983 (1983-03-08) | 11-13 | B01J35/10 |
| Y | * claims; examples; tables * | 1-10 | B01J37/00 B01J37/04 |
| | ----- | | B01J37/06 |
| X,D | CRISTESCU I ET AL: "Investigation of simultaneous tritium and deuterium transfer in a catalytic isotope exchange column for water detritiation", FUSION ENGINEERING AND DESIGN, ELSEVIER SCIENCE PUBLISHERS, AMSTERDAM, NL, vol. 61-62, 1 November 2002 (2002-11-01), pages 537-542, XP004397986, ISSN: 0920-3796, DOI: 10.1016/S0920-3796(02)00164-3 * Experimental TRF – No. 118/16 07 2013, on the new mixed catalytic packing – COMPACK CP-001; compounds * | 11-13 | B01J37/08 |
| | ----- -/-- | | |

TECHNICAL FIELDS
SEARCHED (IPC)

B01J

The present search report has been drawn up for all claims

| Place of search | Date of completion of the search | Examiner |
|---|---|---|
| Munich | 25 April 2023 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

**EP 22 00 0240**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | G. Ionita ET AL: "An assessment on hydrogen isotopes separation by liquid phase catalytic exchange process", Journal of Radioanalytical and Nuclear Chemistry July 2015, Volume 305, Issue 1, pp 117-126, 28 April 2015 (2015-04-28), pages 117-126, XP055335410, DOI: 10.1007/s10967-015-4010-z Retrieved from the Internet: URL:http://download.springer.com/static/pdf/178/art%3A10.1007%2Fs10967-015-4010-z.pdf?originUrl=http://link.springer.com/article/10.1007/s10967-015-4010-z&token2=exp=1484323115~acl=/static/pdf/178/art%253A10.1007%252Fs10967-015-4010-z.pdf?originUrl=http%3A%2F%2Flink.springer.com%2Farticle%2F10.1007%2Fs1 [retrieved on 2017-01-13] * tables; compounds * | 11-13 | |

TECHNICAL FIELDS
SEARCHED (IPC)

The present search report has been drawn up for all claims

| Place of search | Date of completion of the search | Examiner |
|---|---|---|
| Munich | 25 April 2023 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 00 0240

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | | Publication date | Patent family member(s) | | Publication date |
|---|---|---|---|---|---|
| RO 107842 | B1 | 31-01-1994 | NONE | | |
| US 4376066 | A | 08-03-1983 | BE | 884563 A | 17-11-1980 |
| | | | BE | 893715 A | 03-11-1982 |
| | | | CA | 1171059 A | 17-07-1984 |
| | | | EP | 0045552 A1 | 10-02-1982 |
| | | | JP | S6345251 B2 | 08-09-1988 |
| | | | JP | S57105242 A | 30-06-1982 |
| | | | US | 4376066 A | 08-03-1983 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CA 907292 A
- RO 107842 B1
- RO 113218 B1
- RO 107558 B1
- US 4376066 A
- RO 134820 A0
- RO 134746 A0
- CA 907292, W. H. Stevens
- RO 107842
- RO 107558

### Non-patent literature cited in the description

- **MURPHY, G. M.** Production of heavy water. Mc-Grawhill, 1955, 9-52
- **J. P. BUTLER ; J. H. ROLSTON ; W. H. STEVENS.** Novel catalysts for Isotopic Exchange between Hydrogen and Liquid water in Separation of Hydrogen Isotopes. *ACS Symposium Series,* 1977, vol. 68
- **SEUNWOO PAEK DO-HEE AHN et al.** The performance of a trickle-bed reactor packed with a Pt/SDBC catalyst mixture for the CECE process. *Fusion Engineering Design,* 2007, vol. 82 (15), 2252-2258
- **SOON HWAN SOHN ; KUN JAE LEE.** Deactivation of Hydrophobic Pt/SDBC in the WTRF LPCE Column for tritium Separation. *Journal of Nuclear Science and Technology,* 2006, vol. 43 (8), 874-883
- **K. M. SONG ; S. W. PAEK ; D. H. AHN.** Installation of Liquid phase catalytic exchange column for the Wolsong tritium removal facility. *Fusion Engineering and Design,* 2007, vol. 82, 2264-2268
- **B. M. ANDREEV ; M. B. ROZENCHEVICI ; YU SAKHAROVSKII.** Isotope Separation method for Tritium Removal and Concentration. *Nuclear Fuel Cycle - Radiochemistry,* 1997, vol. 39 (2), 95-108
- **I. A. ALEKSEEV ; S. D. BODNARENKO ; O. A. FEDORCENKO et al.** Operating experience of the experimental industrial plant for reprocessing of tritiated wastes. *Fusion Engineering and Design,* 2001, vol. 58-59, 439-443
- **V. TKACENKO ; M.B. ROZENKEVICH.** Experimental Investigation of Concentration dependency of Hydrophobic catalyst performance in Reaction of Isotope Exchange between Water vapor and Hydrogen. *Fusion science and technology,* 2017, vol. 71, 207-214
- **JOHN BRAET ; AIME BRUGGEMAN.** Development of an Improved Hydrophobic Catalyst for Liquid phase Catalytic Exchange. *20-th Symposium on Fusion Engineering SOFE, San Diego CA, USA,* 14 October 2003
- **AIME BRUGGEMAN ; JOHN BRAET ; SVEN VANDERBISEN.** Water Detritiation - Better SCK CEN Catalysts for Liquid Phase Catalytic Exchange. *Fusion Science and Technology,* 2005, vol. 48, 102-107
- **J. H. FIEK ; ROMAKER J. ; SCHINDEWOLF U.** Tritium-Anreicherung durch Isotopen-Austausch zwischen Wasserstoff und Wasser mittels hydrophoben Katalysators für die Kernbrennstoff-Wiederaufbereitung. *Chem. Eng. Tech.,* 1980, vol. 52, 892
- **SHENG HU ; L. P. XIONG ; XINGBI RENA.** Pt-Ir binary Hydrophobic catalyst: Effect of Ir content. *International Journal of Hydrogen Energy,* 2009, vol. 34, 8723-8732
- **FENG HUANG ; CHANGGONG MENG.** Hydrophobic platinum-polytetrafluoroetylene catalyst for Hydrogen isotope separation. *International Journal of Hydrogen Energy,* vol. 43 (20180), 1718-1724
- **I. CRISTESCU ; U. TAMM ; LOANA-R. CRISTESCU ; M. GLUGLA ; C. J. CALDWELL-NICHOLS.** Investigation of simultaneous tritium and deuterium transfer in a catalytic isotope exchange column for water detritiation. *Fusion Engineering and Design,* 2002, vol. 61-62, 537-542
- **G. LONITA ; A. BORNEA ; I. SPIRIDON ; POPESCU GH et al.** *Experimental report on testing Module 100 within Experimental TRF - No. 118/16,* July 2013
- **MURPHY, G. ,M.** Production of heavy water. Mc-Grawhill, 1955, 9-52
- **J. P. BUTLER ; J. H ROLSTON ; W. H. STEVENS.** Novel catalysts for Isotopic Exchange between Hydrogen and Liquid water in Separation of Hydrogen Isotopes. *ACS Symposium Series,* 1977, vol. 68
- **SOON HWAN SOHN ; KUN JAE LEE.** Deactivation of Hydrophobic Pt/SDBC in the WTRF LPCE Column for tritium Separation. *Journal of Nuclear Science and technology,* 2006, vol. 43 (8), 874-883

- **B. M. ANDREEV ; M. B. ROZENCHEVICI ; YU SA-KHAROVSKII.** Isotope Separation method for Tritium Removal and Concentration. *Nuclear Fuel Cycle, Radiochemistry,* 1997, vol. 39 (2), 95-108
- **I. A. ALEKSEEV ; S. D. BODNARENKO ; O. A. FE-DORCENKO et al.** Operating experience of the experimental industrial plant for reprocessing of tritiated wastes. *Fusion Engineering and design,* 2001, vol. 58-59, 439-443
- **V. TKACENKO ; M. B. ROZENKEVICH.** Experimental Investigation of Concentration dependency of Hydrophobic catalyst performance in Reaction of Isotope Exchange between Water vapor and Hydrogen. *Fusion science and technology,* 2017, vol. 71, 207-214
- **AIME BRUGGEMAN ; JOHN BRAET ; SVEN VAN-DERBISEN.** Water Detritiation - Better SCK.CEN Catalysts for Liquid Phase Catalytic Exchange. *Fusion Science and Technology,* 2005, vol. 48, 102-107
- **FIECK, H. J. ; ROMAKER, J. ; SCHINDEWOLF, U.** Tritium-Anreicherung durch Isotopen-Austausch zwischen Wasserstoff und Wasser mittels Hydrophoben Katalysators für die Kernbrennstoff-Wiederaufbereitung. *Chem. Eng. Tech.,* 1980, vol. 52, 892
- **SHENG HU ; L. P. XIONG ; XINGBI RENA.** Pt-Ir binary Hydrophobic catalyst: Effect of Ir content. *International Journal of Hydrogen Energy,* 2009, vol. 34, 8723-8732
- **FENG HUANGA ; CHANGGONG MENG.** Hydrophobic platinum-polytetrafluoroetylene catalyst for Hydrogen isotope separation. *International Journal of Hydrogen Energy,* vol. 43 (20180), 1718-1724
- **I. CRISTESCU ; U. TAMM ; IOANA-R. CRISTESCU ; M. GLUGLA ; C. J. CALDWELL-NI-CHOLS.** Investigation of simultaneous tritium and deuterium transfer in a catalytic isotope exchange column for water detritiation. *Fusion Engineering and Design,* 2002, vol. 61-62, 537-542
- **G. IONITA ; A. BORNEA ; I. SPIRIDON ; POPESCU GH.** *Raport de experimentare a Modulului 100 din cadrul TRF- nr.118/16 07,* 2013